# EUROPÄISCHE PATENTSCHRIFT

(11) **EP 1 288 603 B1**
(45) Veröffentlichungstag und Bekanntmachung des Hinweises auf die Patenterteilung: **05.07.2006**
(21) Anmeldenummer: 02015893.7
(22) Anmeldetag: 17.07.2002
(51) Int. Cl.: F28D 7/16, F28F 27/02, F01N 5/02

(54) **Abgaswärmeübertrager**
Exhaust gas heat exchanger
Echangeur de chaleur pour gaz d'échappement

(30) Priorität: 30.08.2001 DE 10142539
(43) Veröffentlichungstag der Anmeldung: 05.03.2003
(73) Patentinhaber: Behr GmbH & Co. KG, 70469 Stuttgart (DE)
(72) Erfinder: Schmidt, Michael, 76133 Karlsruhe (DE)
(74) Vertreter: Grauel, Andreas

(56) Entgegenhaltungen:
- EP-A- 1 277 945
- DE-A- 3 039 742
- DE-A- 19 962 863
- US-A- 4 876 780

## Beschreibung

Die Erfindung betrifft einen Abgaswärmeübertrager gemäß dem Oberbegriff des Anspruches 1.

Aus der DE 199 62 863 A1 ist ein Abgaswärmeübertrager zur Übertragung von Wärme zwischen dem Abgas einer Brennkraftmaschine eines Kraftfahrzeuges und einem Kühlmittel bekannt, der ein Gehäuse mit einer Abgaseintrittsöffnung und einer Abgasaustrittsöffnung sowie einem Abgaseintrittsbereich und einem Abgasaustrittsbereich und dazwischen einem Wärmeübertragungsbereich umschließt. Hierbei ist in das Gehäuse ein dem Wärmeübertragungsbereich zugeordneter, von einem Teilstrom des Abgases durchströmter Bypasskanal integriert, der gegenüber dem Kühlmittel thermisch isoliert ist. Hierfür ist der Bypasskanal gegenüber dem Wärmeübertragungsbereich durch eine Trennwand fluiddicht abgedichtet.

Derartige Abgaswärmeübertrager lassen jedoch noch Wünsche offen. Der Erfindung liegt die Aufgabe zugrunde, einen derartigen Abgaswärmeübertrager zu verbessern.

Diese Aufgabe wird erfindungsgemäß durch einen Abgaswärmeübertrager mit den Merkmalen des Anspruches 1 gelöst. Vorteilhafte Ausgestaltungen sind Gegenstand der Unteransprüche.

Dadurch, dass der erfindungsgemäße Abgaswärmeübertrager einen im Inneren des Gehäuses angeordneten Bypass aufweist, der doppelwandig ausgebildet ist, erfolgt eine ausreichende Isolation des im Bypass strömenden Abgases gegenüber dem übrigen Innenraum des Gehäuses. Der erfindungsgemäße Abgaswärmeübertrager kann bspw. zur Regelung der Abgastemperatur für einen NOx-Katalysator bei einem direkteinspritzenden Otto-Motor oder für eine geregelte Abgasrückführung verwendet werden.

Erfindungsgemäß weist der Bypass eine äußere Bypassleitung und eine innere Bypassleitung auf, wobei die innere Bypassleitung in Form einer Fest-Los-Lagerung in der äußeren Bypassleitung angeordnet ist. Dies ist besonders in Hinblick auf thermische Spannungen vorteilhaft, so dass ein Abgaswärme-tauscher zur Verfügung gestellt wird, der geringere thermische Spannungen hat und dadurch langlebiger ist.

Vorzugsweise ist die innere Bypassleitung abgaseintrittsseitig direkt oder über ein Übergangsteil fest, insbesondere stoffschlüssig bspw. durch eine Schweißverbindung, mit der äußeren Bypassleitung verbunden. Die innere Bypassleitung ist vorzugsweise zentral in der äußeren Bypassleitung angeordnet, so dass auf allen Seiten ein etwa gleichförmiger Spalt ausgebildet ist.

Vorzugsweise weist ein Teil der Bypassleitung noppenförmige Abstandshalter auf, die zum anderen Teil der Bypassleitung gerichtet sind und eine gleichförmige Spaltbreite gewährleisten. Sie erleichtern unter anderem das Positionieren beim der Montage und dem Verschweißen der beiden Bauteile. Die noppenförmigen Abstandshalter können bspw. auf der Außenseite der inneren Bypassleitung angebracht oder durch einen entsprechenden Umformvorgang hergestellt werden. Vorzugsweise sind die noppenförmigen Abstandshalter an der Außenseite der inneren Bypassleitung vorgesehen.

Vorzugsweise ist die innere Bypassleitung gegenüber der äußeren Bypassleitung, in Strömungsrichtung gesehen, hinten, also abgasaustrittsseitig offen. Dies ermöglicht eine einfache Herstellung bei ausreichender Isolationswirkung des Spaltes zwischen innerer und äußerer Bypassleitung.

Im folgenden ist die Erfindung anhand eines in der Zeichnung dargestellten Ausführungsbeispiels näher erläutert. Es zeigen:
- Fig. 1: einen schematischen nur im unteren Teil näher dargestellten Längsschnitt durch einen Abgaswärmeübertrager gemäß dem Ausführungsbeispiel,
- Fig. 2: eine Detailansicht des Bereichs A von Fig. 1 und
- Fig. 3: einen vereinfacht dargestellten Querschnitt entlang der Linie III-III in Fig. 1.

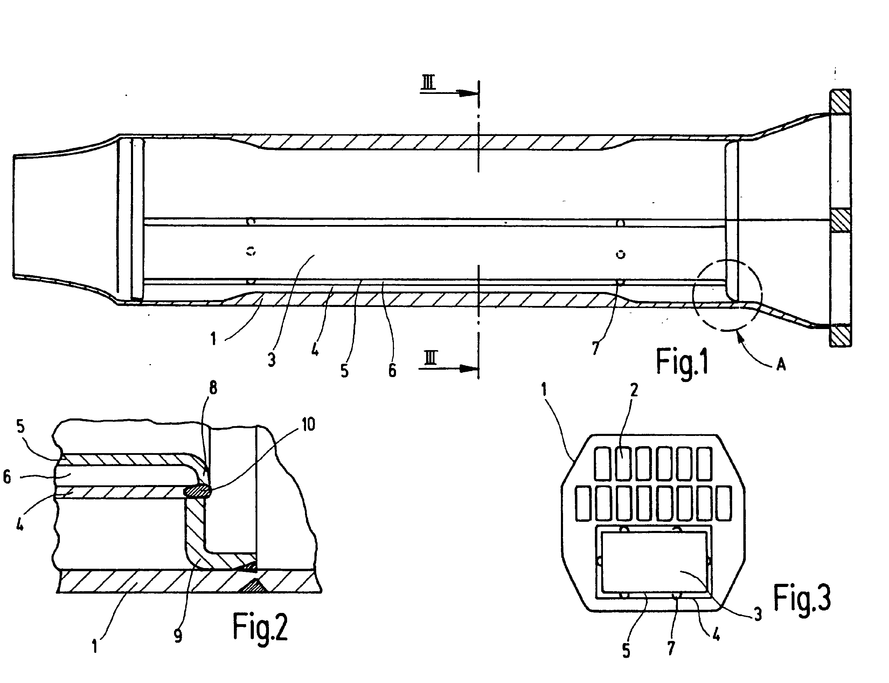

Der in Fig. 1 dargestellte Abgaswärmeübertrager weist ein Gehäuse 1 mit einem 8-eckigen Querschnitt, vierzehn Wingletrohre 2 (siehe Fig. 3, nicht in Fig. 1 dargestellt) und einen Bypass 3 auf. Durch das Innere des Gehäuses 1 strömt Abgas von einem nicht dargestellten Motor kommend, das je nach Bedarf an den von einem Kühlmittel durchströmten Wingletrohren 2 zur Kühlung oder Erwärmung des Abgases vorbeigeführt oder im wesentlichen ohne Temperaturänderung durch den Bypass 3 geleitet wird, so dass es mit einer vorbestimmten Temperatur einem nicht dargestellten, nachfolgend angeordneten NOx-Katalysator zugeführt wird, welcher dann im optimalen Bereich arbeiten kann.

Die vierzehn Wingletrohre 2 sind in einer Längshälfte des Gehäuses 1 in zwei Reihen à sechs und acht Wingletrohren 2 angeordnet. In der anderen Längshälfte des Gehäuses 1 ist der Bypass 3 angeordnet, welcher doppelwandig mit einer äußeren Bypassleitung 4 und einer inneren Bypassleitung 5 ausgebildet, wobei zwischen der äußeren Bypassleitung und der inneren Bypassleitung 5 ein etwa gleichförmiger Spalt 6 ausgebildet ist. Dabei weisen beide Bypassleitungen 4 und 5 einen im wesentlichen rechteckigen Querschnitt auf. Auf der Außenseite der inneren Bypassleitung 5 sind Noppen 7 ausgebildet, welche als Abstandshalter dienen. Jeweils 4 Noppen 7 sind auf den Längsseiten und jeweils 2 Noppen 7 sind auf den Querseiten der inneren Bypassleitung 5 vorgesehen, welche im wesentlichen die Position der inneren Bypassleitung 5 in der äußeren Bypassleitung 4 und somit den gleichförmigen Spalt 6 bestimmen. Der Spalt 6 dient der Isolierung des Inneren der inneren Bypassleitung 4 gegenüber dem übrigen Innenraum des Gehäuses 1, so dass ein möglichst geringer Wärmeübergang dazwischen erfolgt.

Die innere Bypassleitung 5 ist anströmseitig, in der Fig. 1 und 2 rechts dargestellt, mit einem in radialer Richtung nach außen gebogenen Rand 8 versehen. Mit dem äußeren Ende des Randes 8 ist die innere Bypassleitung 5 mit der äußeren Bypassleitung 4 und einem Übergangsstück 9 verschweißt (Schweißnaht 10). Das Übergangsstück 9 ist seinerseits an seinem äußeren Rand mit dem Gehäuse 1 des Abgaswärmeübertragers verschweißt. Abströmseitig ist die innere Bypassleitung 5 gegenüber der äußeren Bypassleitung 4 offen, so dass sie in Form einer Fest-Los-Lagerung in der äußeren Bypassleitung 4 angebracht ist.

### Bezugszeichenliste

- 1: Gehäuse
- 2: Wingletrohre
- 3: Bypass
- 4: äußere Bypassleitung
- 5: innere Bypassleitung
- 6: Spalt
- 7: Noppen
- 8: Rand
- 9: Übergangsstück
- 10: Schweißnaht

## Patentansprüche

1. Abgaswärmeübertrager zur Übertragung von Wärme zwischen dem Abgas einer Brennkraftmaschine eines Kraftfahrzeugs und einem Kühlmittel, mit einem Gehäuse (1), das eine Abgaseintrittsöffnung und eine Abgasaustrittsöffnung und einen Wärmeübertragungsbereich umschließt, wobei im Gehäuse (1) ein von zumindest einem Teilstrom des Abgases durchströmbarer Bypass (3) integriert ist, der gegenüber dem Kühlmittel thermisch isoliert ist, **dadurch gekennzeichnet, dass** der Bypass (3) doppelwandig ausgebildet ist und eine äußere Bypassleitung (4) und eine innere Bypassleitung (5) aufweist, wobei die innere Bypassleitung (5) in Form einer Fest-Los-Lagerung in der äußeren Bypassleitung (4) angeordnet ist.

2. Abgaswärmeübertrager nach Anspruch 1, **dadurch gekennzeichnet, dass** der Wärmeübertragungsbereich durch Rohre (2) gebildet ist, die in einer Längshälfte des Gehäuses (1) angeordnet sind, und dass der Bypass in der anderen Längshälfte des Gehäuses (1) angeordnet ist.

3. Abgaswärmeübertrager nach einem der vorstehenden Ansprüche, **dadurch gekennzeichnet, dass** die innere Bypassleitung (5) abgaseintrittsseitig direkt oder über ein Übergangsteil (9) fest, insbesondere stoffschlüssig, mit der äußeren Bypassleitung (4) verbunden ist.

4. Abgaswärmeübertrager nach einem der vorstehenden Ansprüche, **dadurch gekennzeichnet, dass** die innere Bypassleitung (5) zentral in der äußeren Bypassleitung (4) angeordnet ist.

5. Abgaswärmeübertrager nach einem der vorstehenden Ansprüche, **dadurch gekennzeichnet, dass** ein Teil der Bypassleitung (5) noppenförmige Abstandshalter (7) aufweist, die zum anderen Teil der Bypassleitung (4) gerichtet sind.

6. Abgaswärmeübertrager nach Anspruch 5, **dadurch gekennzeichnet, dass** die noppenförmigen Abstandshalter (7) an der inneren Bypassleitung (5) vorgesehen sind.

7. Abgaswärmeübertrager nach einem der vorstehenden Ansprüche, **dadurch gekennzeichnet, dass** die innere Bypassleitung (5) gegenüber der äußeren Bypassleitung (4) abgasaustrittsseitig offen ist.

## Claims

1. Exhaust gas heat exchanger for transferring heat between the exhaust gas of an internal combustion engine of a motor vehicle and a coolant, with a housing (1) comprising an exhaust gas inlet and an exhaust gas outlet and a heat transfer area, wherein a bypass (3) for at least a partial flow of exhaust gas is integrated into the housing (1) and thermally insulated against the coolant, **characterised in that** the bypass (3) is designed to be double-walled and comprises an outer bypass line (4) and an inner bypass line (5), the inner bypass line (5) being located in the outer bypass line (4) in a fast-and-loose arrangement.

2. Exhaust gas heat exchanger according to claim 1, **characterised in that** the heat transfer area is represented by tubes (2) located in one longitudinal half of the housing (1), and **in that** the bypass (3) is located in the other longitudinal half of the housing (1).

3. Exhaust gas heat exchanger according to any of the preceding claims, **characterised in that** the inner bypass line (5) is permanently, in particular by adhesive forces, joined to the outer bypass line (4) either directly or via an adapter (9) at the exhaust gas inlet end.

4. Exhaust gas heat exchanger according to any of the preceding claims, **characterised in that** the inner bypass line (5) is located centrally in the outer bypass line (4).

5. Exhaust gas heat exchanger according to any of the preceding claims, **characterised in that** a part of the bypass line (5) is provided with knob-shaped spacers (7) oriented towards the other part of the bypass line (4).

6. Exhaust gas heat exchanger according to claim 5, **characterised in that** the knob-shaped spacers (7) are provided on the inner bypass line (5).

7. Exhaust gas heat exchanger according to any of the preceding claims, **characterised in that** the inner bypass line (5) is open to the outer bypass line (4) at the exhaust gas outlet end.

## Revendications

1. Échangeur de chaleur pour gaz d'échappement pour la transmission de chaleur entre les gaz d'échappement d'un moteur à combustion interne d'un véhicule automobile et un réfrigérant, comprenant un boîtier (1), qui entoure un orifice d'entrée de gaz d'échappement et un orifice de sortie de gaz d'échappement et une zone d'échange de chaleur, une dérivation (3) pouvant être traversée par au moins un flux partiel des gaz d'échappement, qui est isolée thermiquement par rapport au réfrigérant, étant intégré dans le boîtier (1), **caractérisé en ce** la dérivation (3) est conçue avec une double paroi et présente une conduite de dérivation (4) extérieure et une conduite de dérivation (5) intérieure, la conduite de dérivation (5) intérieure étant disposée sous la forme d'un logement fixe-libre de la conduite de dérivation (4) extérieure.

2. Échangeur de chaleur pour gaz d'échappement selon la revendication 1, **caractérisé en ce que** la zone d'échange de chaleur est formée par des tuyaux (2) qui sont disposés dans une moitié de longueur du boîtier (1) et **en ce que** la dérivation est disposée dans l'autre moitié de longueur du boîtier (1).

3. Échangeur de chaleur pour gaz d'échappement selon l'une quelconque des revendications précédentes, **caractérisé en ce que** la conduite de dérivation (5) intérieure est reliée de façon fixe, en particulier par adhésion de matière, à la conduite de dérivation (4) extérieure côté entrée des gaz d'échappement directement ou par l'intermédiaire d'une partie de transition (9).

4. Échangeur de chaleur pour gaz d'échappement selon l'une quelconque des revendications précédentes, **caractérisé en ce que** la conduite de dérivation (5) intérieure est disposée de façon centrale dans la conduite de dérivation (4) extérieure.

5. Échangeur de chaleur pour gaz d'échappement selon l'une quelconque des revendications précédentes, **caractérisé en ce qu'**une partie de la conduite de dérivation (5) présente des écarteurs (7) en forme de nopes, qui sont orientés vers l'autre partie de la conduite de dérivation (4).

6. Échangeur de chaleur pour gaz d'échappement selon la revendication 5, **caractérisé en ce que** les écarteurs (7) en forme de nopes sont prévus sur la conduite de dérivation (5) intérieure.

7. Échangeur de chaleur pour gaz d'échappement selon l'une quelconque des revendications précédentes, **caractérisé en ce que** la conduite de dérivation (5) intérieure est ouverte côté sortie des gaz d'échappement par rapport à la conduite de dérivation (4) extérieure.
